# EUROPEAN PATENT APPLICATION

(11) **EP 1 876 452 A1**
(43) Date of publication of application: **09.01.2008**
(21) Application number: 06713279.5
(22) Date of filing: 08.02.2006
(51) Int. Cl.: G01N 35/04, G01N 35/10

(54) **MULTIPLE-SAMPLE AUTOPROCESSING SYSTEM AND METHOD OF MULTIPLE-SAMPLE AUTOPROCESSING**

(30) Priority: 04.04.2005 JP 2005107631
(71) Applicant: Riken, Wako-shi, Saitama 351-0198 (JP)
(72) Inventor: DOHMAE, Naoshi, 3510198 (JP); NAKAYAMA, Hiroshi, 3510198 (JP); KITSUNAI, Tokuji, 3510198 (JP)
(74) Representative: Ziebig, Marlene
(86) International application number: PCT/JP2006/302136
(87) International publication number: WO 2006/106597

(57) **Abstract**

A system completely automates process steps to reduce contamination, enables quantification of products, and reduces the defective ratio. Sample containers are transported on a unit by unit basis, each unit consisting of a predetermined number of containers, and supplied to the individual dispensing/aspiration apparatuses and each reaction bath. In order to ensure quantification and reliability of the reaction/processing of the sample, a reaction monitoring sensor is provided, and the sample containers are affixed with barcodes to identify the samples. Samples determined through monitoring to be defective are returned to a predetermined step site where reaction/processing is performed again.

## Description

### TECHNICAL FIELD

The present invention relates to a multiple-sample automatic processing system for processing samples through a plurality of processing steps, and to a multiple-sample automatic processing method.

### BACKGROUND ART

In many fields, such as the field of sample analysis, it is necessary to perform a plurality of processes for a sample in a step-by-step manner. For example, in proteome analysis, where a protein sample (gel) is converted into a peptide mixture which is then supplied to a mass spectrometer, it is necessary to perform, as pretreatment, destaining of a protein gel band, drying of the gel band, reductive alkylation reaction, and enzyme digestion reaction in sequence.
Non-patent document 1: Toshiaki Isobe (ed.) and Nobuhiro Takahashi (ed.) "Proteome Analysis Method: State-of-the-art, technologies for protein expression/function analysis, and genome/drug discovery studies" Yodosha Co., Ltd.
Non-patent document 2. Shevchenko A, Wilm M, Vorm O, Maine M. "Mass spectrometric sequencing of proteins silver-stained polyacrylamide gels" Anal Chem. 1996 Mar 1;68 (5) : 850-8.

### DISCLOSURE OF THE INVENTION

### PROBLEMS TO BE SOLVED BY THE INVENTION

Regarding the preparation of a peptide mixture, a peptide mixture can be prepared either manually or it can be prepared automatically using a commercially available automatic preparation apparatus. Currently, both methods have their own advantages and disadvantages. When preparation is conducted manually, since processing is normally performed on a sample by sample basis, the reaction status of individual samples is monitored and any unreacted sample is subjected to an appropriate reaction as needed, so that the development of a defective sample can be prevented. However, since the preparation is performed by a human, the process is subject to mistaking of samples due to the operator's carelessness. Depending on the level of skill of the operator, the reproducibility of the operation may be lowered, resulting in a delayed treatment or inconsistent conditions. Furthermore, there is the problem of contamination in which protein deriving from the operator enters the sample. On the other hand, automatic preparation apparatuses are superior in that, since they do not involve human labor for preparation, they are capable of multiple simultaneous processing, that they can prevent human errors, and that contamination can be prevented. However, since they lack the reaction monitoring function, they may eventually invite an increase in defect ratio. Furthermore, an automatic preparation apparatus capable of multiple simultaneous processing, even if it is equipped with the reaction monitoring mechanism to monitor reaction status, cannot easily perform error processing individually.

In view of such problems, it is an object of the invention to provide a system capable of eliminating human errors in the multiple-sample processing by achieving complete automation of process steps, reducing contamination, enabling quantification of products, and controlling defect ratio.

### MEANS OF SOLVING THE PROBLEMS

In accordance with the present invention, processing steps are completely automated, and each step is provided with a reaction monitoring function to extract an unreacted sample and subject it to a reaction again, so as to achieve the aforementioned object. In accordance with the present invention, when 8 × 12 sample containers can be placed, for example, in a sample container storage area, a maximum of 96 sample containers can be consecutively processed. In this case, sample containers are transported in units of eight and fed to each dispensing/aspiration apparatus and each reaction bath. After each of the reaction processing steps, the sample containers are brought back to their original positions in the sample container plate. In order to ensure quantification and reliability of reaction processing of sample, the stability of dispensing aspiration of processing solution (dispensing of a predetermined amount complete aspiration) is monitored and, as needed, reaction status is monitored with a reaction monitoring sensor. A sample determined to be defective by monitoring is returned to a predetermined step and subjected to a reaction/processing again.

Specifically, the present invention provides a multiple-sample automatic processing system for processing a plurality of samples through a plurality of processing steps, comprising: a sample container storage area in which a plurality of sample containers are placed, a dummy container storage area in which a dummy container is placed; a first processing portion and a second processing portion which perform different processes with respect to a sample in a container; an inspecting portion for inspecting a sample in a container; a container transport portion for transporting a container between each of the container storage areas, the processing portions, and the inspecting portion; and a control portion,
wherein the control portion controls each of the portions to process a unit of n (which is a positive integer of two or greater) containers in the first processing portion, wherein, upon discovery of a sample that failed in an inspection by the inspecting portion after the processing, the container containing the unsuccessful sample is combined with a dummy container to obtain a group of n containers that is subjected to defect processing, and a container containing a successful sample is combined with a dummy container to obtain a group of n containers that are processed in the second processing portion.

Preferably, the container transport portion comprises a first container holding portion simultaneously holding n containers and a second container holding portion holding a single container. The first processing portion and the second processing portion each comprise dispensing means for injecting or aspirating a processing solution into or out of the group of n containers. The dispensing means may be shared by the first processing portion and the second processing portion. The dispensing means may be provided in the container transport portion.

The present invention also provides a multiple-sample automatic processing method for processing a plurality of samples through a plurality of processing steps, comprising the steps of: processing in a first processing portion a sample in each of containers in a group of n (which is a positive integer of two or greater) containers; performing a first inspection on the samples that have been processed in the first processing portion; forming, upon discovery of a sample that failed in the first inspection, a first container unit consisting of n containers by combining the container containing the unsuccessful sample with a dummy container; performing a defect processing on the first container unit; performing a second inspection on the samples after the defect processing; forming a second container unit consisting of n containers by combining a container containing a sample that passed the second inspection with a dummy container, terming a third container unit consisting of n containers by combining a container containing a sample that passed the first inspection with a dummy container; and processing in the second processing portion the samples in the second container unit and the samples in the third container unit.

### EFFECTS OF THE INVENTION

In accordance with the present invention, the processing of samples through a plurality of processing steps can be automated so that a large number of samples can be quickly and reproducibly processed. Contamination can be prevented and the defective ratio of samples due to incomplete processing can be reduced.

### BRIEF DESCRIPTION OF THE DRAWINGS

Fig. 1 schematically shows the overall configuration of a sample processing system according to the present invention.
Fig. 2 shows an example of a transport head,
Fig. 3 shows an example of a transport head equipped with a dispensing device.
Fig. 4 shows how a container is transported by a rod having a container retaining portion at the tip thereof.
Fig, 5 shows a flowchart indicating the outline of a process performed in each processing step.
Fig. 6 is a conceptual chart visually illustrating the flowchart of Fig. 4.
Fig. 7 shows in greater detail the flow of containers of successful samples and containers of unsuccessful samples.
Fig. 8 shows a flowchart of a protein gel band destaining process.
Fig. 9 shows an example of an inspection method.
Fig. 10 shows a flowchart of a protein gel band reductive alkylation process.
Fig. 11 illustrates the management of sample container information based on barcodes.

### DESCRIPTION OF THE NUMERALS

- 11: sample container storage area
- 12: dummy container storage area
- 13: defective container storage area
- 14: dispensing station
- 15: barcode reader
- 16: vibrating constant-temperature bath
- 17: vacuum centrifuge
- 18a: constant-temperature bath
- 18b: ice bath
- 19: light-shielding bath
- 20: inspecting station
- 21a, 21b: rails
- 22: ball screw
- 23: transport head
- 24: control portion
- 31: rod
- 32: container retaining portion
- 33: first container transport portion
- 34: second container transport portion
- 41: sample container
- 50: reagent bottle storage area
- 51: inspected container storage area
- 52: rod external tube
- 53: container lid
- 54: pressing pin
- 55: pipettor head
- 56: external tube for removal of tip
- 57: pipetting tip
- 58: first dispensing portion
- 59: second dispensing portion
- 60: pipe-tting tip storage area
- 61: pipetting tip disposal area

### BEST MODE OF CARRYING OUT THE INVENTION

In the following, an embodiment of the present invention is described. Specifically, the present invention is described with reference to an example in which a gel band or spot of a protein separated by electrophoresis is processed, and a digested peptide mixture sample for analysis by liquid chromatography mass spectrometry is prepared. In the sample processing system of the present example, with a view to subjecting a protein sample to automatic chemical reaction and enzyme reaction, converting it into a peptide mixture, and supplying such mixture to a mass spectrometer for proteome analysis, a protein spot (gel piece) obtained by two-dimensional electrophoresis is put in a sample container (volume 700 µl) and is, through the reactions/processes of destaining of the gel piece, reductive alkylation, in-gel digestion, and desalinating concentration and the like, then fed to the mass spectrometer. It is noted however that the present invention is not limited to the example hereafter described but is applicable to general processing methods involving multiple-stages of processing performed on multiple samples.

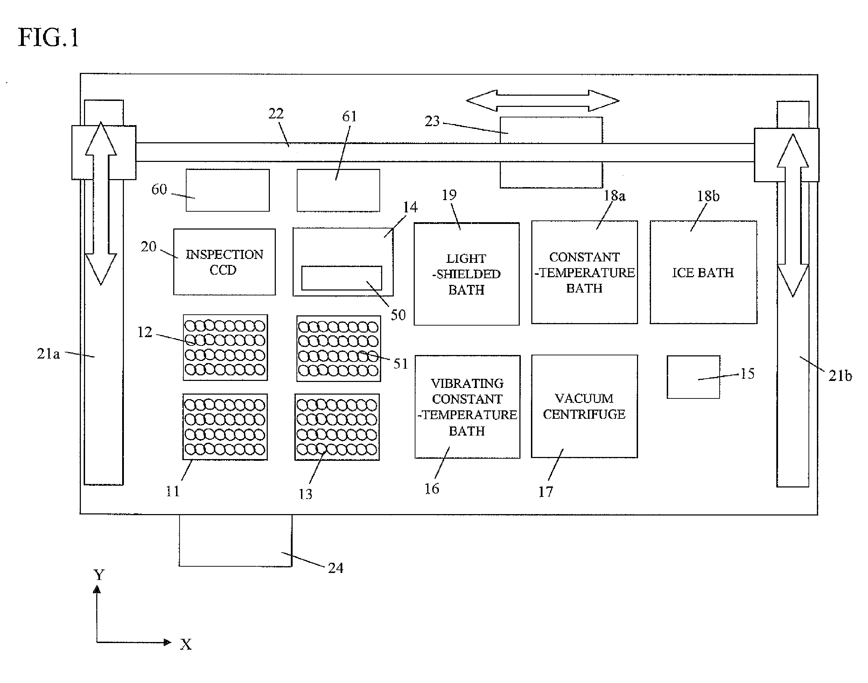

Fig. 1 schematically shows the overall configuration of a sample processing system of the present invention. This sample processing system comprises: a sample container storage area 11 for holding test-tube-like transparent containers each containing a sample; a dummy container storage area 12 for holding test-tube-like transparent containers (dummy containers) containing no sample; a defective container storage area 13 for temporarily holding containers containing a sample that has failed in an inspection, which will be described later; a inspection container storage area 51; a dispensing station 14 having a reagent bottle storage area 50 for bottles containing solid reagent; a barcode reader 15 for reading two -dimensional barcodes affixed to the bottom of the transparent containers identifying individual samples; a vibrating constant-temperature bath 16; a vacuum centrifuge 17; a constant-temperature bath 18a; an ice bath 18b; a light-shielding bath 19; and an inspecting station 20 where an inspection CCD camera is located. There are also a pipetting tip storage area 60 for placing discarded pipetting tips, and a pipetting tip disposal area 61 for the disposal of used pipetting tips.

Above these, a transport head 23 is installed for the transport of a plurality of containers in units, each unit consisting of eight containers, for example, to individual portions, The transport head 23 is movable along a ball screw 22 in an X direction, The ball screw 22 is movable along rails 21a and 21b in a Y direction. As a result, the transport head 23 is capable of transporting the containers to any desired location in the X-Y directions. The dispensing station 14 has eight, nozzles connected to a reagent container or a destaining solution container, and it is capable of injecting a processing solution into each unit of containers, namely the eight containers transported by the transport head 23, or aspirating solution from the containers. By switching the processing solution container connected to the nozzle, a processing solution required by processing can be selected and supplied to each container via the nozzle. Each portion of the apparatus is controlled by a control portion 34.

A processing portion for performing processing on the sample in the containers comprises a plurality of units, such as a dispensing device and a constant-temperature bath, or a dispensing device and a vibrating constant-temperature bath, for example, for the injection/aspiration of a processing solution into and out of the containers, as shown in Fig. 1. The dispensing device may be provided for each processing portion individually; it may also be shared by a plurality of processing portions. In the present example, a plurality of processing portions share a single dispensing device. The dispensing device may be fixedly provided on the apparatus or it may be provided on the transport head.

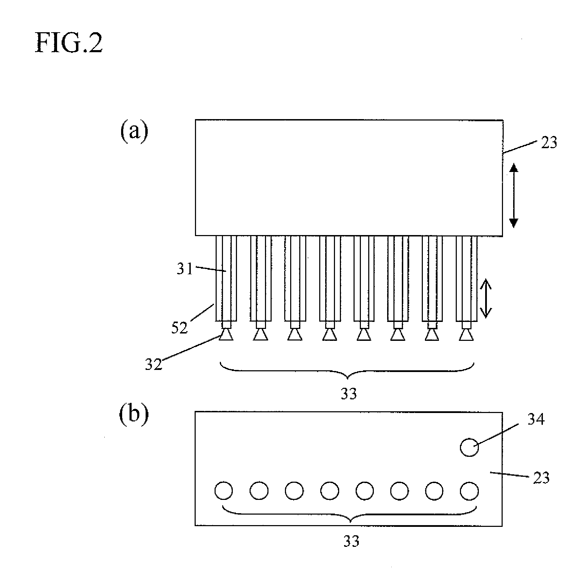

Fig. 2 shows an example of the transport head, Fig. 2(a) shows a schematic front view, and Fig. 2(b) shows a schematic bottom-surface view. The transport head 23 has rods 31 extending downwardly, each of which having a container retaining portion 32 at the tip thereof. The lower end of the container retaining portion 32 is expanded in a direction perpendicular to the rod axis such that it fits in a concave portion of the container, as will be described later. The outside of each rod is provided with a hollow external tube 52 having a diameter greater than the container retaining portion 32. The hollow external tube 52 is movable vertically independently of the rod. Eight of such rods 31 form a unit which constitutes a first container transport portion 33, which is movable vertically, the eight rods moving simultaneously as shown by the arrows. The transport head 23 also has a second container transport portion 34 consisting of a rod which is similarly equipped with a container retaining portion and an external tube but which is only capable of independently transporting a single container. The eight external tubes of the first container transport portion 33 are also movable vertically in units of eight.

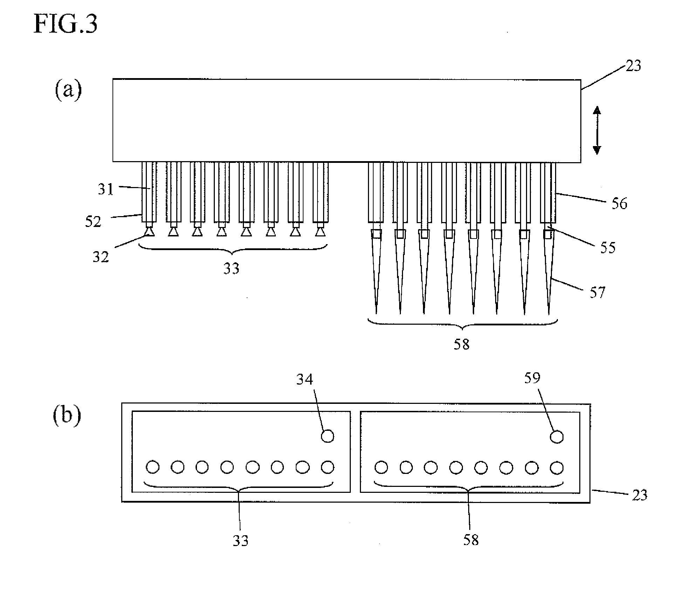

The dispensing device for dispensing a processing solution into the container may be either fixedly provided in the dispensing station 14; or it may be provided on the transport head so that the transport head can be moved to the dispensing station for dispensing. Fig. 3 shows an example of the transport head equipped with the dispensing device. Fig. 3(a) is a schematic front view and Fig. 3(b) is a schematic bottom surface view. The transport/dispensing head 23 shown in Fig. 3 consists of a transport head portion and a dispensing head portion, which may be movable vertically simultaneously or independently from each other.

The transport head portion, as shown in Fig. 3, has rod 31 extending downwardly therefrom, each having a container retaining portion 32 at the tip. The tip of the container retaining portion 32 is expanded in a direction perpendicular to the rod axis such that it fits in a concave portion of the container lid, as will be described later, On the outside of each rod, there is provided a hollow external tube 52 having a diameter greater than the container retaining portion 32; the hollow external tube is movable vertically independently of the rod. Eight such rods 31 form a unit which constitutes a first container transport portion 33, the eight rods being movable simultaneously and vertically, as indicated by the arrows. The transport bead portion also has a second container transport portion 34 consisting of a rod similarly having a container retaining portion and an external tube at the tip thereof but which is capable of transporting only one container independently.

The dispensing head portion, as shown in Fig. 3, has pipettor heads 55 extending downwardly therefrom, each of which is capable of mounting a pipetting tip 57 at the tip thereof. Eight of such pipettors form a unit which constitutes a first dispensing portion 58, the eight pipettors moving simultaneously and vertically as indicated by the arrows. The dispensing head portion also has a second dispensing portion 59 similarly consisting of a pipettor capable of mounting a pipetting tip 57 at the tip but which is only capable of independent dispensing or aspiration of a single container. Each of the pipettors is attached with a hollow external tube 56 vertically movible independently of the pipettor head 55 for the separation of the tip.

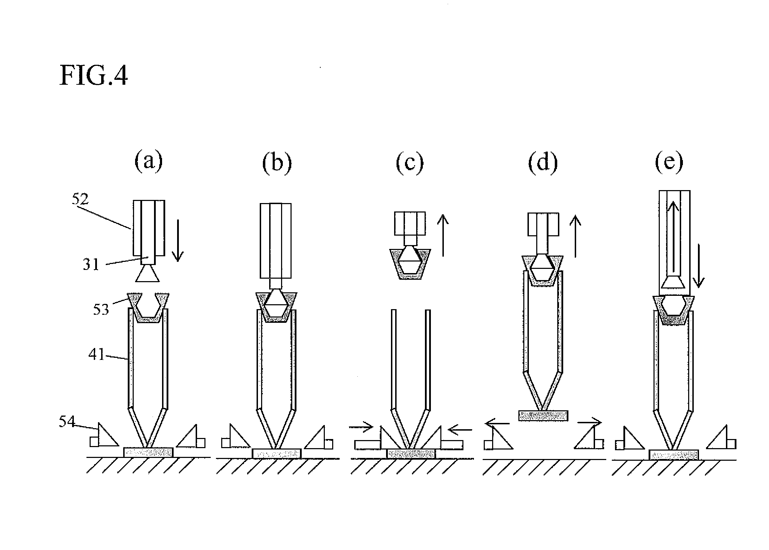

Fig. 4 illustrates how a container is transported by the rod 31 having the container retaining portion 32 at the tip and how the container lid is opened and closed, Fig. 4(a) shows the container 41 with a lid placed in the sample container storage area, for example, above which the transport head is positioned, where the rod 31 having the container retaining portion 32 at the tip is being lowered from the transport head. Fig. 4(b) shows the container retaining portion 32 provided at the tip of the rod 3 having been inserted into and fixed in a concave portion of the lid 53 fitted in the opening of the container 41.

Fig. 4(c) shows how the lid 53 of the container is opened. The pressing pin 54 is normally open by the force of a spring or magnetic force, as shown in Fig. 4(a), The pressing pin 54 can be moved inwardly by pneumatic pressure or the like to press the lower portion of the container, thereby fixing the container 41. In this state, by raising the transport head with the lid 53 fixed to the rod 31, as shown in Fig. 4(b), the lid 53 can be removed from the container 41. Fig. 4(d) shows the rod 31 that has been raised with the container retaining portion 32 fixed in the concave portion of the opening of the lid 53 of the container 41. The container 41 is raised by the rod 31 with the container retaining portion 32 being fitted in the concave portion of the lid 53. In this state, by moving the transport head, the container is transported.

Fig. 4(e) shows how the transported container is placed. After having been transported to a desired position, the container is grounded. Then, the external tube 52 of the rod is lowered, and by lifting the rod 31 with the lid 53 being kept pushed down, the lid 53 can be removed from the transport head 23. The lid 53 stays fitted in the opening of the container 41.

The structure of the transport head shown in Fig. 2 and Fig. 3 and the method of container transport illustrated with Fig. 4 are merely examples; other structures or methods may be employed for the transport of the container.

In the case of the transport head equipped with the dispensing device shown in Fig. Fig. 3, at the end of dispensing or aspiration of processing solution, the control portion 24 causes the transport head to be moved above the pipetting tip disposal area 61, where the tip-detaching external tube 56 is lowered to remove the pipetting tip off the pipettor head 55 and discard it in the pipetting tip disposal area 61. When attaching the pipetting tip, the control portion 24 causes the transport head to be moved above the pipetting tip storage area 60, and positions the pipettor heads 55 to be aligned with the pipetting tips arranged in order in the pipetting tip storage area 60. The pipettor head portion is then lowered to insert the pipettor head 55 into the opening at the top of the pipetting tip, thus fitting the pipetting tip on the pipettor head 55. Thereafter, the dispensing head portion is raised, the transport head is moved to the dispensing station, and dispensing operation is earned out.

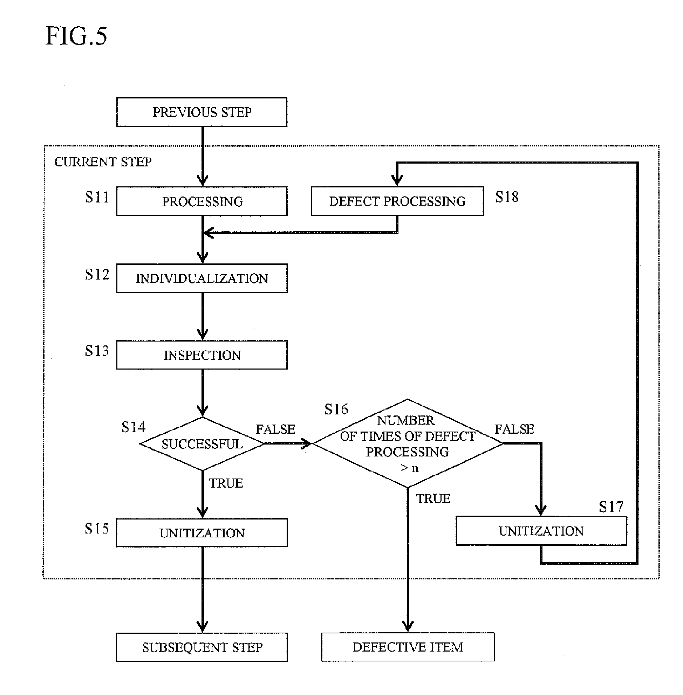

Fig. 5 shows a flowchart of the processes performed in individual processing steps. Samples that have been processed in previous steps are processed in units of a predetermined number of containers (S11). After processing, the containers with their individual samples are individualized (S12) and are individually checked to see if required processing has been completed (S13). Samples that passed the inspection are grouped into a unit (S15) and transferred to the next processing step. Samples that failed the inspection are grouped into a unit (S17) and sent to defect processing (S18). After defect processing, the containers are again individualized (S12) and subjected to an inspection (S13). The number of times of defect processing is preset. Those containers containing samples that do not pass the inspection after the predetermined number of times of defect processing are registered as defective items that are not subjected to subsequent processing. In the grouping into units in S15 and S17, dummy containers are added so as to align the number of the containers to the number of the single unit (which is eight in the present example). The individualizing step in S12 is required for the individual inspection of me samples. If it is possible to perform the inspection, of S13 on the individual samples with the containers grouped in units, the step of S12 may be omitted.

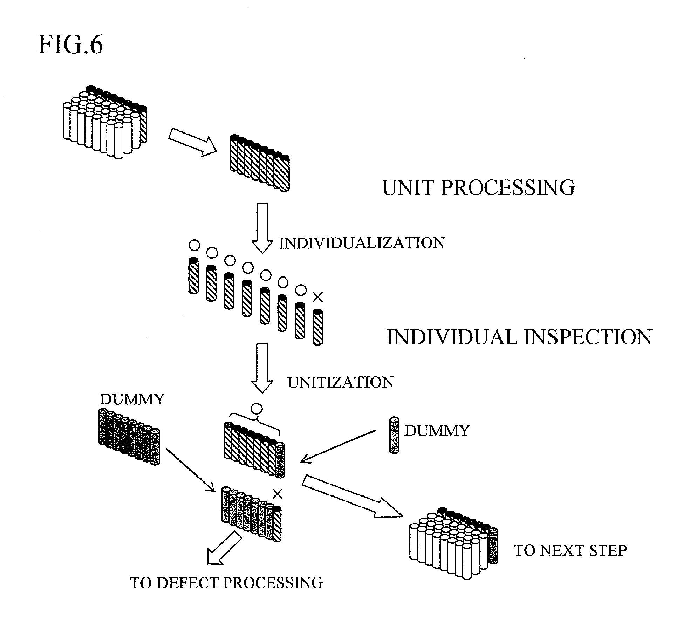

Fig. 6 is a conceptual chart visually illustrating the flowchart of Fig. 5. Containers containing samples are processed in units of a predetermined number of containers. The containers in each unit are then individualized and are individually subjected to an inspection concerning the processed status. It is assumed, as shown in the figure, that seven containers indicated with circles passed the inspection while one container indicated with a cross failed. In this case, the containers are individualized into those that passed and those that failed. One dummy container is added to the successful containers to make a unit of eight, while seven dummy containers are added to the unsuccessful containers to also make a unit of eight. In this way, the containers are grouped into units, and me unsuccessful units are sent to defect processing. Those containers that eventually passed the inspection after defect processing are again grouped into a unit and sent to subsequent processing steps, together with the previously successful units.

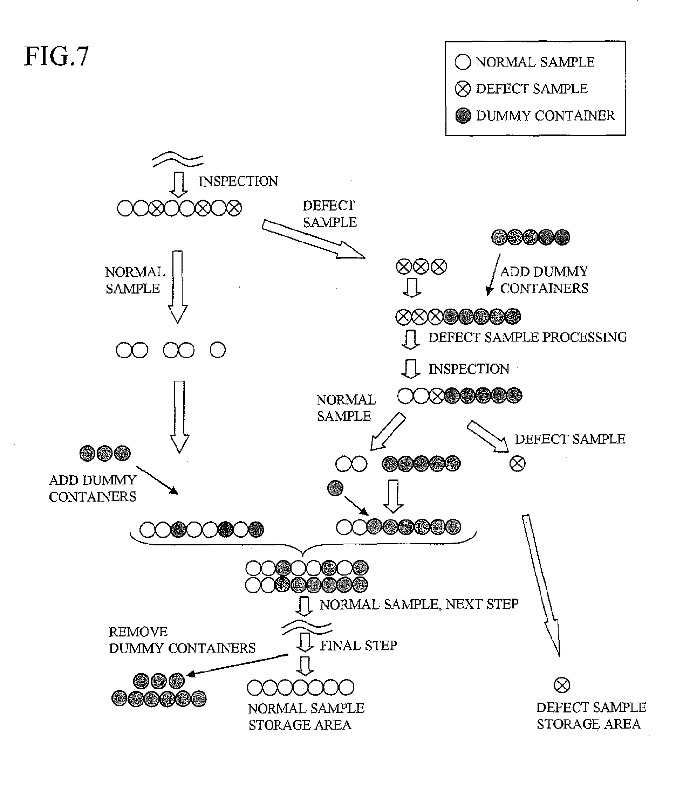

Fig. 7 shows in greater detail the flow of those containers containing samples that passed the inspection and those containers containing samples that failed.

The samples that have been processed in units are subjected to an inspection to determine whether each sample in the unit is normal or defective. Defective samples are removed from the unit, and dummy containers are inserted in those locations where there were defective samples, thereby creating a normal sample unit. On the other hand, the defective samples removed from the unit are likewise provided with dummy containers so as to create a unit, which is then subjected to defect processing. At the end of defect processing, the samples are again inspected, and those samples that still failed are removed from the unit and sent to the defective container storage area. Where the defective samples have been removed, dummy containers are added to create a normal sample unit. The two normal sample units thus obtained are processed in a subsequent processing step. At the end of the final processing step, the dummy containers are removed from the unit, while the samples that have been normally subjected to various processing are stored in the normal sample storage area.

In the examples of Fig. 6 and Fig. 7, dummy containers are added to defective samples for each unit that has been inspected, so as to create a unit for defect processing, However, if the time of reaction or the like permits, it is also possible to perform an inspection on the entire (96, for example, if the total number of samples is 96) containers (or any desired intermediate number, such as 48, of containers), remove and collect unsuccessful samples from each unit, and then form a defective sample unit consisting of eight containers (if the number exceeds eight, the initial eight are grouped into a unit and dummies are added to the rest).

In the following, an example of concrete processing is described. The sample processing system of the present example performs the following processing steps in automatic operation:
(1) Step of destaining a protein gel band dyed with Coomassie blue dye.
(2) Step of washing and dehydration of gel band.
(3) Step of drying gel band.
(4) Step of reductive alkylation.
(5) Step of enzyme digestion reaction.
(6) Step of inspecting whether the steps of (1), (4), and (5) are proceeding as expected.
(7) Step of recording inspection result with sample identification numbers.
(8) Step of adjustment depending on inspection result.

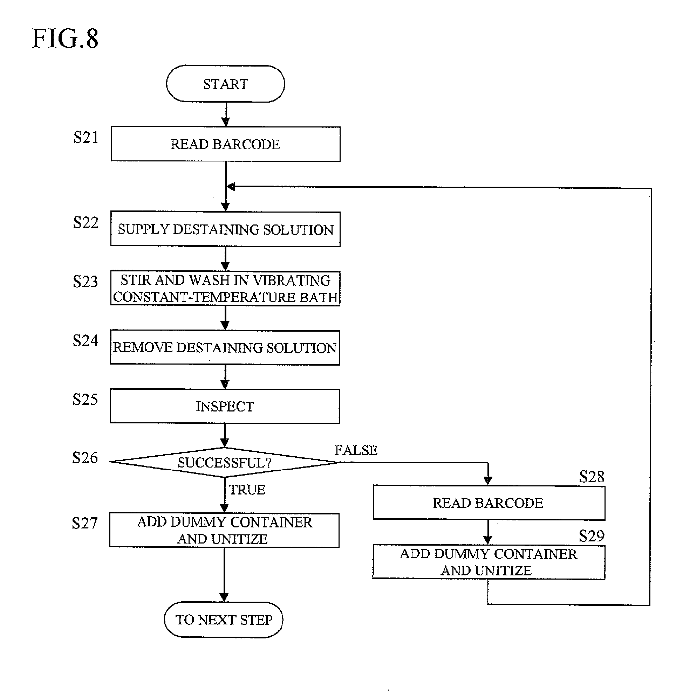

In the following, the individual steps are described in detail. Fig. 8 shows a flowchart of the protein gel band destaining processing.

In the destaining step, the control portion 24 initially causes the transport head 23 to be moved above the sample container storage area 11 where, using the first container transport portion of the transport head 23, one unit of eight sample containers is removed from the sample container storage area 11. The transport head 23 retaining the one unit of sample containers is then moved above the barcode reader 15, where the information in the two-dimensional barcode affixed to the lower surface of each container is read by the barcode reader 15 (S21). The information thus read is stored in memory in the control portion 34. The transport head 23 then transports the sample containers to the dispensing station 14, where the containers are lowered and then their lids are opened. At the dispensing station, destaining solution (methanol acetate solution) is dispensed into each of the containers in the unit (S22). The transport head then transports the sample containers dispensed with the destaining solution, with their lids closed, to the vibrating constant-temperature bath 16. In the following dispensing operation, unless otherwise specified, the lid is opened immediately before dispensing and closed immediately thereafter, followed by the other processes.

In the vibrating constant-temperature bath 16, whose temperature is adjusted to 37°C±1°C, the samples are incubated, stirred, and washed (S23). After a predetermined time of washing, the one unit of sample containers is again transported by the transport head to the dispensing station 14. At the dispensing station 14, each of the sample containers in the unit is inserted with a nozzle to remove the destaining solution by aspiration (S24), The sample containers from which the destaining solution has been removed are transported by the transport head 23 to the inspecting station 20.

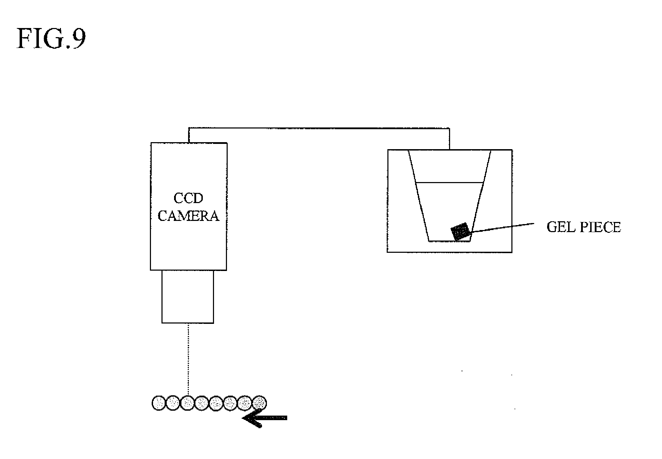

The inspecting station 20 is installed with a CCD camera as an imaging device. As shown in Fig. 9, as the transport head 23 moves the sequence of containers of each unit before the CCD camera, the sample in each container is inspected (S25). In this inspection step, a sample passes if the gel piece in its container is sufficiently destained; a sample fails if the color tone of its gel piece exceeds a predetermined threshold value, indicating an insufficient destaining (S26).

After all of the containers have been inspected, the transport head 23 is moved to the dispensing station where it lowers the unit of sample containers, Then, using the second container transport portion of the transport head 23, a defective sample is transported to the two-dimensional barcode reader 15, where the barcode information of the defective sample is read (S28), The information thus read is stored in memory in the control portion 24. Thereafter, the container containing the defective sample is transported to the defective container storage area 13 by the transport head 23 for temporal withdrawal.

Then, the transport head 23, using its second container transport portion, removes the dummy containers from the dummy container storage area 12 and inserts them at the vacant locations (where the containers removed as defective samples had been located) of the sequence of containers remaining in the dispensing station. This operation is repeated the same number of times as the number of defective samples so that the number of containers placed in the dispensing station becomes eight and a unit can be made again. The containers to which dummy containers were added to create the unit of eight are transported to the sample container storage area 11 where they stand by for the next processing (S27).

Hereafter, the defect processing performed on the samples that failed in the inspection is described.

The control portion 24 initially causes the transport head 23 to be moved over the defective container storage area 13, where, using the second container transport portion, the containers containing the failed samples that had been withdrawn in the defective container storage area 13 are picked up and transported to the dispensing station 14. This operation is repeated the same number of times as the number of the defective samples, and the containers that contain the defective samples are all transported to the dispensing station 14. Then, using the second container transport portion of the transport head 23, a required number of dummy containers from the dummy container storage area 12 are transported to the dispensing station 14 and a unit of eight containers is formed (S29).

Thereafter, the nozzle is inserted into each of the containers including the dummy containers, via which destaining solution is dispensed. (S22). Aller the dispensing of destaining solution is completed, the unit is raised from the dispensing station 14 using the first container transport portion of the transport head 23 and transported to the vibrating constant-temperature bath 16. The unit including the containers containing the defective samples is incubated, stirred, and destained in the vibrating constant-temperature bath 16 (S23), At the end of destaining, the sample containers in the unit are again transported by the transport head 23 to the dispensing station 14. At the dispensing station 14, a nozzle is inserted into each of the sample containers in the unit, and the destaining solution is removed via the nozzle by aspiration (S24). The sample containers from which the destaining solution has been removed are transported by the transport, head 23 to the inspecting station 20.

At the inspecting station, the transport head 23 causes the sequence of containers in the unit to be moved in front of the CCD camera so as to inspect the samples in the containers (S25). Since the position of the dummy containers is known, the control portion does not inspect the dummy containers based on this information. After the required inspection is completed, the transport head 23 moves to the dispensing station where the sample containers of the unit are lowered. If there are still those defective samples that failed the inspection, such defective samples are transported to the two-dimensional barcode reader 15 using the second container transport portion of the transport head 23 so as to read the barcode information of the samples. The information thus read is stored in memory in the control portion 24. Thereafter, the containers containing the defective samples are transported by the transport head 23 to the defective container storage area 13.

Then, the transport head 23, using the second container transport portion, picks out dummy containers from the dummy container storage area 12 and inserts them in the vacant locations (where the containers removed as defective samples had been) of the sequence of containers still remaining in the dispensing station. In this way, the number of the containers placed in the dispensing station is made eight to create a unit again (S27). The containers of the inspection-passed samples to which dummy containers were added to make a total of eight containers for a unit are transported to the sample container storage area 11 where they stand by for the next processing.

The samples at the end of the destaining step are then subjected to the washing and dehydration step to remove the methanol acetate solution and make them easy to dry. The control portion 24 initially moves the transport head 23 over the sample container storage area 11, and then, using the first container transport portion of the transport head 23, picks out a unit of eight sample containers from the sample container storage area 11 and transports them to the dispensing station 14 where the containers are lowered. At the dispensing station, ultrapure water is dispensed into each of the containers of the unit. The transport head transports the sample containers dispensed with the washing solution to the vibrating constant-temperature bath 16. In the vibrating constant-temperature bath 16, whose temperature is adjusted to 37°C±1°C. the samples are incubated, stirred, and washed. At the end of a predetermined time of washing, the sample containers of the unit are transported again by the transport head to the dispensing station 14. At the dispensing station 14, a nozzle is inserted in each of the sample containers of the unit, and the washing solution is removed via the nozzle by aspiration. This washing process is performed a predetermined number of times.

Thereafter, a dehydration solution (acetonitrile) is dispensed into the sample containers after washing. The sample containers into which the dehydration solution has been dispensed are transported, by the transport head to the vibrating constant-temperature bath 16. In the vibrating constant-temperature bath 16, whose temperature is adjusted to 37°C±1°C, the samples are incubated and subjected to dehydration process. At the end of a predetermined time of processing, the sample containers of the unit are transported again by the transport head to the dispensing station 14, where a nozzle is inserted into each of the sample containers of the unit to remove the dehydration solution by aspiration. After the dehydration process is performed a predetermined number of times, the sample containers are transported to the sample container storage area 11 on a unit by unit basis where they stand by for the next processing.

In the gel band drying step, one unit of sample containers placed in the sample container storage area 11 is transported by the transport head 23 to the vacuum centrifuge 17 to perform vacuum centrifugal drying for 30 minutes. The containers of the unit for which the drying step has been completed are returned to the sample container storage area 11.

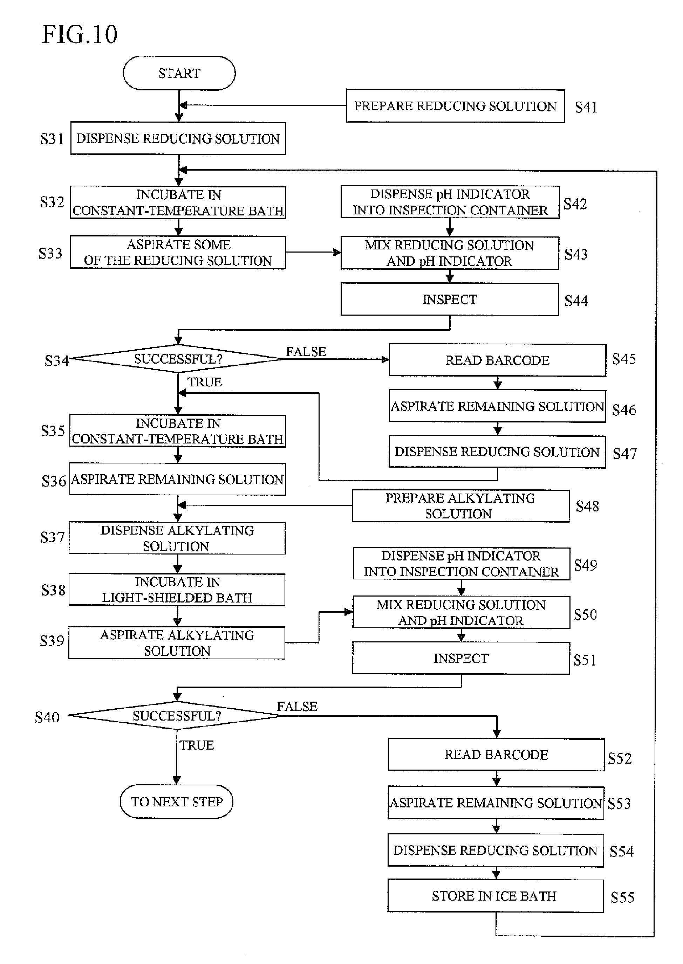

Fig. 10 shows a flowchart of a protein gel band reductive alkylation process.

In the reductive alkylation step, after the cysteine residue in the protein in the gel is reduced, the cysteine residue is protected with an alkyl group. The reaction is conducted in an nitrogen atmosphere and under a light-shielded condition so that reductive alkylation reaction can be performed using dithiothreitol as the reducing solution and iodoacetate as the alkylating agent. First, the reducing solution is prepared (S41). The control portion 24 then drives the transport head 23 to transport one unit of sample containers placed in the sample container storage area 11 to the dispensing station 14. At the dispensing station 14, the prepared reducing solution is dispensed into each of the containers that have been transported (S31). Then, the transport head 23 transports the one unit of containers into which the reducing solution has been dispensed to the constant-temperature bath 18a. The containers are allowed to stand in the constant-temperature bath 18a (37°0, 30 min) to cause a reaction. Similarly, all of the units are subjected to the reductive reaction (S32).

Then, the transport head 23 transports a vacant container from the inspection container storage area 51 to the dispensing station 14 in preparation for pH inspection. A pH indicator in the reagent storage area 50 within the station is dispensed into the container (S42). At the end of the reaction time, the sample containers of the unit are transported from the constant-temperature bath 18a to the dispensing station 14, where some of the reaction solution is aspirated with a pipettor (S33). The thus aspirated reaction solution is discharged into the inspection container; the aspiration and discharge is repeated so as to mix the solution with the pH indicator that has been previously dispensed therein (S43).

The inspection container is transported to the inspecting station 20. A change in color of the pH indicator is detected with the CCD camera in the inspecting station 20. The CCD camera records an image of a mixture of a buffer having a known pH and the pH indicator prior to sample analysis for calibration purposes; the control portion then makes a determination based on a comparison of such image with actual measurement values of the sample (S44).

If there is a pH-defective sample, the containers of normal samples in the unit are transported to their original locations in the constant-temperature bath (S35). After the barcode of the defective sample container is read (S45), the remaining solution is aspirated (S46) and a reducing solution is dispensed again (100 µl) (S47). Thereafter, the container is transported back to the original location in the constant-temperature bath 18a where it is allowed to stand (37°C, 60 min) to cause a reaction (S35).

Thereafter, an alkylating solution is prepared (S48). At the end of the reducing reaction time, the transport head 23 transports one unit of containers in the constant-temperature bath 18a to the dispensing station 14. At the dispensing station 14, the solution unabsorbed by the gel is completely aspirated from each container (36), and then the alkylating solution is dispensed (100 µl) (S37). The transport head 23 then transports the containers to the light-shielding bath 19 where they are allowed to stand (room temperature, 30 min) to cause a reaction (S38).

The transport, head 23 then transports the containers from the light-shielding bath 19 to the inspecting station 20 where pH inspection is conducted as in the reducing step. If there is a pH defective sample, the pH defective sample has its barcode read by the barcode reader (S52), the remaining solution is aspirated (S53), reducing solution is dispensed (100 µl) (S54), and the container is transported to the ice bath 18b where it stands by (S55). Such sample is again subjected to reductive alkylation reaction from step S32 after the normal samples are processed.

The samples that have been subjected to the reductive alkylation reaction step are then subjected to a washing and dehydration step for removing excess reagent or buffer solution. This step is identical to the above described washing and dehydration step with the exception that, instead of ultrapure water, ammonium bicarbonate solution is used.

The samples that have been subjected to the washing and dehydration step are again subjected to the drying step, as described above.

Next, the enzyme digestion reaction step is briefly described. First, an enzyme solution is prepared. A protein degrading enzyme is prepared beforehand and put in a container in the reagent storage area 50 within the dispensing station, in the form of a freeze-dried product of an amount required by each analysis. Into this container, ultrapure water is dispensed with a pipettor such that a specified concentration is achieved, followed by repeated aspiration and discharge to dissolve the protein degrading enzyme. Then, one unit of sample containers placed in the sample container storage area 11 are transported to the dispensing station 14. After a specified amount of the previously prepared enzyme solution is dispensed into each sample container, the sample containers are transported to the ice bath 18b. The containers are placed at rest in the ice bath, and the gel in the containers is allowed to swell for a predetermined time. The containers containing the gel swollen for the predetermined time are then transported to the inspecting station to inspect the degree of swelling. The dry get before swelling is white; the gel that has become swollen due to absorption of enzyme solution is Colorless and transparent. Thus, using the decrease of white as an indicator, the degree of swelling is determined.

The one unit of sample containers for which the swell inspection has been performed is transported to the dispensing station. If there is a defective-swell sample, the defective sample is transported to the two-dimensional barcode reader 15 by means of the second container transport portion of the transport head 23 so as to read the barcode information of the defective sample. The thus read information is stored in memory in the control portion 24. Thereafter, the container of the defective sample, is transported by the transport head 23 to the ice bath 18b for temporary withdrawal.

The transport head 23 then picks out a dummy container from the dummy container storage area 12 using its second container transport portion, and inserts it in a location (where the container removed as defective sample had been) of the sequence of containers remaining in the dispensing station. This operation is repeated the same number of times as the number of the defective samples so as to make the number of containers placed in the dispensing station eight, thereby again obtaining a unit. After dispensing the digestive buffer solution, the unit is again transported to the ice bath where the containers are placed at rest for a predetermined time.

The sample containers after the predetermined period of time has elapsed are transported to the dispensing station where a specified amount of digestive buffer solution is again added. The transport head 23 transports the sample containers in which the digestive buffer solution has been added to the constant-temperature bath 18a. In the constant-temperature bath, whose temperature is adjusted to 37°C±1°C, the samples are placed at rest to carry out an enzyme digestion reaction. The transport head 23 then transports a vacant container from the inspection container storage area 51 to the dispensing station 14 in preparation for a pH inspection. Into this container, the pH indicator in the reagent storage area 50 within the station is dispensed. At the end of the reaction time, one unit of sample containers is transported from the constant-temperature bath 18a to the dispensing station 14 where some of the reaction solution is aspirated with a pipettor. The thus aspirated reaction solution is then discharged into the inspection container to mix it with the previously dispensed pH indicator by aspiration/discharge. The inspection container is then transported to the inspecting station 20. The change in color of the pH indicator is detected with the CCD camera. The CCD camera records an image of a mixture of a buffer of a known pH and the pH indicator prior to sample analysis for calibration purposes. The image is compared with actual measurement values of the sample by the control portion 24 to make a determination.

In the foregoing descriptions, for the purpose of describing a general operation, the individual processings are performed starting from the sample container storage area, and then the process returns to the sample storage area. However, when a specific protocol is implemented in practice, the individual steps may be directly connected without going through the sample storage area. For example, it is possible to prepare a reducing solution in the drying step, directly transport one unit from the vacuum centrifuge to the dispensing station at the end of the drying step, and then dispense the reducing solution. By thus coupling the individual steps without going through the sample storage area, more efficient preparation can be made possible.

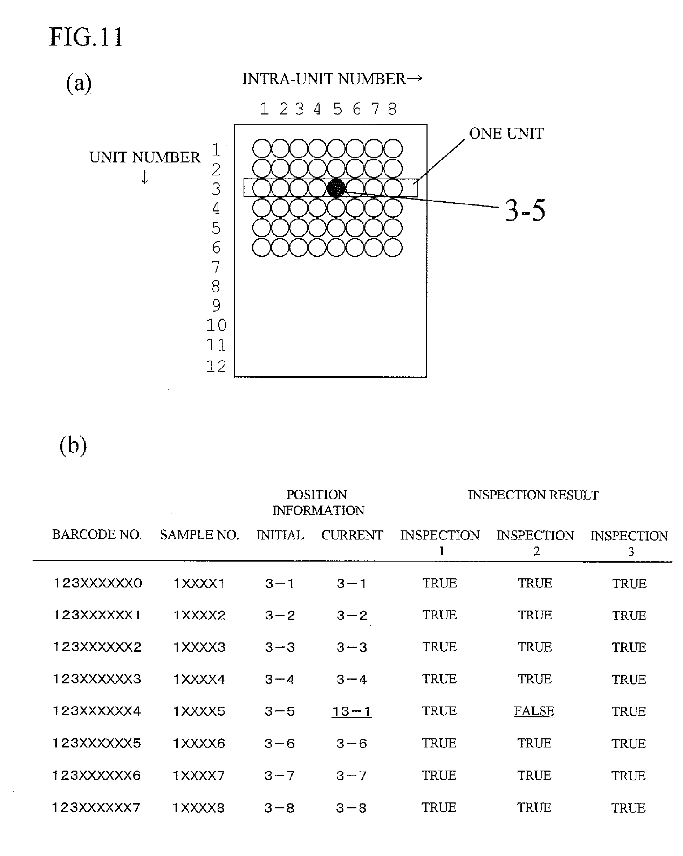

In the foregoing example, each sample container is affixed with a barcode for the purpose of sample and information management based on the barcode. Fig. 11 shows an example of how barcode data is used.

The management of the sample containers is based on their two-dimensional barcode and physical locations in the sample storage area. The barcode information in the present example is affixed to the bottom surface of the container in which the sample is put. The position data consists of two-dimensional data in which the row numbers (such as row numbers 1 to 12 in the case of preparing 96 samples) indicate the position of each 8-containers unit and the column numbers indicate the position of each container within each 8-containers unit. For example, a fifth tube from the origin in the third row is registered as "3-5" (see Fig. 11(a)).

Fig. 11(b) shows an example of how the barcode information and the position information are managed. At the beginning of automatic operation, the transport head transports the sample containers in units (of eight) above the barcode reader so as to have the barcode of each container read. Each time a new barcode is read, the control portion 24 generates a new line of data, and records the position information in an initial position column and a current position column, as shown in Fig. 11(b). During automatic operation, sample containers are taken out on a. unit by unit basis, processed, and then returned to their original positions in the sample storage area 11. Thus, the relationship between barcode information and position information is maintained.

If in the inspection step a container is determined to be a defective sample, its barcode is read and the corresponding inspection result column is thus indicated ("False"). The container containing the sample that failed the inspection is transported to a predetermined location, such as the defective container storage area, and a dummy container is transported to the original position instead. The current position column in the control portion is written over with the position to which the defective sample has been transported. If the initial position column and the current position column differ from each other, the control portion performs the subsequent steps based on the recognition that there is a dummy container in the corresponding initial position column.

## Claims

1. A multiple-sample automatic processing system for processing a plurality of samples through a plurality of processing steps, comprising:
a sample container storage area in which a plurality of sample containers are placed;
a dummy container storage area in which a dummy container is placed;
a first processing portion and a second processing portion which perform different processes with respect to a sample in a container;
an inspecting portion for inspecting a sample in a container;
a container transport portion for transporting a container between each of the container storage areas, the processing portions, and the inspecting portion; and
a control portion,
wherein the control portion controls each of the portions to process a unit of n (which is a positive integer of two or greater) containers in the first processing portion, wherein, upon discovery of a sample that failed an inspection by the inspecting portion after the processing, the container containing the unsuccessful sample is combined with a dummy container to obtain a group of n containers that is subjected to defect processing, a container containing a successful sample is combined with a dummy container to obtain a group of n containers that are processed in the second processing portion.

2. The multiple-sample automatic processing system according to claim 1, wherein the defect processing includes returning the group of n containers to the first processing portion for are-processing.

3. The multiple-sample automatic processing system according to claim 1 or 2, wherein the container transport portion comprises a first container holding portion simultaneously holding n containers and a second container holding portion holding a single container.

4. The multiple-sample automatic processing system according to any one of claims 1 to 3, wherein the first processing portion and the second processing portion each comprise dispensing means for injecting or aspirating a processing solution into or out of the group of n containers.

5. The multiple-sample automatic processing system according to claim 4, wherein the dispensing means is shared by the first processing portion and the second processing portion.

6. The multiple-sample automatic processing system according to claim 4, wherein the dispensing means is provided in the container transport portion.

7. The multiple-sample automatic processing system according to any one of claims 1 to 6, wherein the inspecting portion comprises an imaging device to image the sample in each container for inspection.

8. A multiple-sample automatic processing method for processing a plurality of samples through a plurality of processing steps, comprising the steps of:
processing in a first processing portion a sample in each of containers in a group of n (which is a positive integer of two or greater) containers;
performing a first inspection on the samples that have been processed in the first processing portion;
forming, upon discovery of a sample that failed in the first inspection, a first container unit consisting of n containers by combining the container containing the unsuccessful sample with a dummy container;
performing a defect processing on the first container unit;
performing a second inspection on the samples after the defect processing;
forming a second container unit consisting of n containers by combining a container containing a sample that passed the second inspection with a dummy container;
forming a third container unit consisting of n containers by combining a container containing a sample that passed the first inspection with a dummy container; and
processing in the second processing portion the samples in the second container unit and the samples in the third container unit.

9. The multiple-sample automatic processing method according to claim 8, wherein the first container unit includes a container that failed in separate first inspections performed on separate groups of containers,

10. The multiple-sample automatic processing method according to claim 8 or 9, wherein the defect processing includes returning the first container unit to the first processing portion for processing.

11. The multiple-sample automatic processing method according to any one of claims 8 to 10, wherein, in the first processing portion, a processing solution is injected into the n containers to cause a reaction, and the processing solution is aspired after reaction.

12. The multiple-sample automatic processing method according to any one of claims 8 to 11, wherein the inspections are carried out by imaging the samples in the containers.
